# EUROPÄISCHE PATENTANMELDUNG

(11) **EP 0 641 644 A1**
(43) Veröffentlichungstag der Anmeldung: **08.03.1995**
(21) Anmeldenummer: 94113116.1
(22) Anmeldetag: 23.08.1994
(51) Int. Cl.: B30B 15/16, B30B 15/24

(54) **Verfahren zur Regelung des Antriebs einer hydraulischen Presse und Vorrichtung zur Durchführung des Verfahrens**

(30) Priorität: 02.09.1993 DE 4329480
(71) Anmelder: Maschinenfabrik Müller-Weingarten AG, D-88250 Weingarten (DE)
(72) Erfinder: Otremba, Carsten, Dipl.-Ing., D-73733 Esslingen (DE); Schaich, Günther, Dipl.-Ing., D-73230 Kirchheim-Teck (DE); Beyer, Joachim, Dipl.-Ing., D-88213 Ravensburg (DE)
(74) Vertreter: Patentanwälte Eisele, Otten & Roth

(57) **Zusammenfassung**

Es wird ein Verfahren zur Regelung des Antriebs einer hydraulischen Presse sowie eine zugehörige Vorrichtung zur Durchführung des Verfahrens vorgeschlagen, bei welchem der Antrieb der zu einem Pressenstößel (1) zugehörigen Kolben-Zylindereinheit (2, 3) über mehrere, hintereinandergeschaltete Hydraulikeinrichtungen (10, 12, 20) erfolgt. Dabei werden je nach Arbeitsphase der Presse die Hydraulikeinrichtungen je nach Bedarf als Hydromotoren oder Hydropumpen eingesetzt, die eine Druckmittelförderung in den jeweiligen Zylinderraum (7, 8) bewirken.

## Beschreibung

Die Erfindung betrifft ein Verfahren zur Regelung des Antriebs einer hydraulischen Presse und eine Vorrichtung zur Durchführung des Verfahrens nach dem Oberbegriff des Anspruchs 1 bzw. des Vorrichtungsanspruchs.

Bei hydraulischen Pressen ist der Pressenstößel mit einer oder mehreren Kolben-Zylindereinheiten verbunden. Wesentliche Kenngrößen des hydraulischen Antriebs stellen der Druck und der Förderstrom des Druckmediums dar. Über entsprechende Pumpen und Regeleinrichtungen (Leistungs-, Druck- und Hubregler) können beide Kenngrößen an den jeweiligen Arbeitsvorgang angepaßt werden. Je nach Art des Antriebes unterscheidet man hydraulische Pressen mit unmittelbarem Pumpenantrieb sowie hydraulische Pressen mit Speicherantrieb (siehe z. B. Manfred Weck: Werkzeugmaschinen Bd. 1 S. 103 bis 105). Beim unmittelbaren oder Direktantrieb wirkt eine von einem E-Motor angetriebene Konstant- oder Verstellpumpe (Hydropumpe) auf den Hauptarbeitszylinder, der zur Erzeugung der Preßkraft auf der großen zylindrischen Kolbenfläche und zum Heben des Stößels auf der kleineren Ringfläche des Kolbens der Kolben-Zylindereinheit mit Druckmedium beaufschlagt wird. Die Pumpe sowie der Antriebsmotor müssen stets auf den größten Leistungsbedarf der Presse ausgelegt sein. Die Hochdruckpumpe kann dabei als Verstellpumpe bzw. verstellbare Hydropumpe ausgebildet, um eine stufenlose Verstellung der Fördermenge und damit der Stößelgeschwindigkeit einzustellen. Bei niedrigem Druck wird demnach eine große Flüssigkeitsmenge gefördert und dadurch dem Preßwerkzeug eine große Geschwindigkeit vermittelt und umgekehrt. Dies ist für einen schnellen Hub als Eilgang und für eine hohe Kraftbeaufschlagung beim Umformvorgang zweckmäßig. Nachteilig ist jedoch, daß die Antriebsenergie der Pumpe ständig zwischen Null und einem Höchstwert wechselt. Dies gibt erhebliche Belastungen des Stromnetzes. Nachteilig am Direktantrieb ist weiterhin, daß die Lageenergie des Stößels sowie der abwärtsbewegten Massen des Systems ungenützt bleiben, da das aus dem Ringzylinder bei der Abwärtsbewegung des Kolbens ausströmende Druckmedium lediglich über ein Wegeventil in einen Tank oder Ölbehälter abgelassen wird.

Eine andere Antriebsvariante für hydraulische Pressen ist der Speicherantrieb. Hier fördert eine von einem E-Motor angetriebene konstant fördernde Pumpe zunächst in einen Hochdruckspeicher, aus welchem dann der Arbeitszylinder über ein Proportionalventil mit dem Speicherdruck gespeist wird. Dieser hohe Speicherdruck steht allerdings während der gesamten Abwärtshubbewegung zur Verfügung und somit auch bereits während des sogenannten Eilgangs mit an sich geringerem Energiebedarf. Der eigentliche Umformvorgang des Werkstückes mit der dafür erforderlichen hohen Umformkraft, die durch den Speicherdruck erzeugt wird, erfolgt erst bei dem wesentlich kleineren Arbeitshub nach dem Eilgang.

Für den nachfolgenden Abwärtshub muß der Speicher wieder mit der hohen und nur zum geringeren Teil genutzten Energie bzw. Druck aufgeladen werden. Dieses erfordert für die Ladepumpe eine entsprechend hohe elektrische Antriebsleistung.

Die gesamte Energiebilanz ist somit bei dem Speicherbetrieb außerordentlich ungünstig und in der Praxis werden Nutzungswirkungsgrade von ca. 20 % bis 30 % erreicht.

Beim Speicherantrieb bekannter Pressen wird weiterhin die Lageenergie der sich abwärtsbewegenden Teile nicht ausgenützt, d. h. das zu verdrängende Hydraulikmedium wird in Ölbehälter abgelassen. Eine Rückgewinnung der Bewegungsenergie des aus der Kolben-Zylindereinheit auströmenden Druckmediums ist nicht vorgesehen.

Der Druckmediumzufluß durch die Hydraulikpumpe bzw. dem Hydrospeicher zum Hydrozylinder der Presse sowie der Druckmedium-Abfluß aus dem ringförmigen Zylinderraum unterhalb des Kolbens wird über Mehrwegeventile gesteuert.

Der Erfindung liegt die Aufgabe zugrunde, ein neuartiges Verfahren zur Regelung des Antriebs einer hydraulischen Presse sowie eine zugehörige Presse vorzuschlagen, bei welcher die zu den oben beschriebenen Systemen angesprochene Nachteile vermieden werden. Insbesondere soll eine Pressensteuerung unter Verwendung eines Hydrospeichers erzielt werden, die einen hohen Wirkungsgrad bei optimaler Betriebsweise ermöglicht. Aufgabe der Erfindung ist es weiterhin, einen möglichst wirtschaftlichen Einsatz von Regelungs-, Steuerungs- und Antriebsorganen beim Einsatz mehrerer Kolben-Zylindereinheiten an Pressen vorzusehen.

Diese Aufgabe wird ausgehend von einem Verfahren nach der Gattung des Anspruchs 1 bzw. der Gattung des Vorrichtungsanspruchs erfindunggemäß durch die kennzeichnenden Merkmale gelöst.

In den Unteransprüchen sind weitere vorteilhafte und zweckmäßige Weiterbildungen der jeweils vorangestellten Ansprüche angegeben.

### Vorteile der Erfindung:

Der Erfindung liegt der Kerngedanke zugrunde, das Prinzip der sogenannten "Sekundärregelung" für einen hydraulischen Pressenantrieb zu verwirklichen bzw. zu optimieren. Abweichend von der bekannten Regelung des im Pressenzylinder geforderten Druckniveaus mittels Druckmittelpumpe oder Proportionalventilregelung sieht die "Sekundärregelung" vor, daß mittels geeigneter Hydraulik- und Speichereinrichtungen bei gleichbleibend hohem Druckniveau die Leistungsabgabe über eine Volumenstromänderung des Hydraulikmediums erfolgt. Dies entspricht einer Gleichstrommotorregelung mit vorgegebener Netzspannung und geregeltem Stromfluß. Dabei erfolgt die Volumenstromänderung über verstellbare Hydromotoren die aus einem Druckspeicher mit Druckmedium beaufschlagt werden.

Mittels der "Sekundärregelung" kann die Kolben-Zylindereinheit zum Antrieb des Pressenstößels quasi von der unmittelbaren Druckbeaufschlagung des Druckspeichers entkoppelt werden, d. h. die Energieübertragung auf die Kolben-Zylindereinheit findet über den regelbaren Hydromotor statt. Benötigt beispielsweise die Koben-Zylindereinheit im Eilgang bei niedrigem Druck einen hohen Volumenstrom als Leistung, so kann diese mittels der "Sekundäreinheit" dadurch erzeugt werden, daß einem Hydromotor bei hohem Druckniveau nur ein niedriger Volumenstrom zugeführt wird. Umgekehrt wird beim Umformvorgang am Werkstück ein hoher Druck in der Kolben-Zylindereinheit benötigt, bei kleinem Volumenstrom, d. h. geringerer Kolbengeschwindigkeit. Dies wird durch die Senkundäreinheit bei eingeprägtem hohen Druckniveau durch eine entsprechende Erhöhung des den Hydromotor passierenden Volumenstroms erzeugt. Hierdurch bleibt die hohe Effektivität des aufgeladenen Speichers erhalten.

Die Vorteile der Erfindung liegen demnach u. a. in einer sehr einfachen Geschwindigkeitsregelung des Pressenstößels im vorgeschalteten Eilgang, was über eine Drehzahlregelung und Schwenkwinkelverstellung einer Verstellpumpe beeinflußt werden kann.

Weiterhin kann der Speicher auch gleichzeitig zur Speicherung von überschüssigen Energien (Lageenergie) dienen, d. h. es ist auch die Energieeinsparung durch Ausnutzung der Lageenergie von Stößel und Oberwerkzeug bei sich abwärts bewegendem Stößel vorgesehen.

Ein zusätzlicher Pumpenantrieb lädt den Speicher auf den erforderlichen Druck für die Aufbringung der maximalen Pressenkraft auf.

Bei Verwendung von mehreren Hydrozylindern am Stößel kann eine sehr wirksame Parallelregelung des Stößels erzielt werden, was wiederum durch die Verstellung an den jeweiligen Verstellpumpen im Zusammenhang mit einer Drehzahl- und Wegmessung erfolgen kann.

Eine weitere Besonderheit der erfindungsgemäßen Schaltung liegt in einer wirksamen Kraftregelung über das Drehmoment auf die Antriebswelle der Antriebspumpe zur Druckbeaufschlagung der Kolben-Zylindereinheit mittels einer schwenkwinkelverstellbaren Hydropumpe.

Vorteilhaft ist weiterhin, daß auch mehrere parallel angeordnete Pressen von einer zentralen Energieversorgung gespeist werden können.

Weitere Einzelheiten und Vorteile der Erfindung werden in der nachfolgenden Beschreibung des Verfahrens sowie der Vorrichtung anhand der Figurendarstellung näher erläutert.

Es zeigen:
- Fig. 1: eine schematische Darstellung einer hydraulischen Presse mit Regelorganen zur erfindungsgemäßen Regelung der Presse,
- Fig. 2: eine schematische Darstellung mehrerer Stößel bzw. hydraulischer Pressen mit zentraler Versorgung durch Hydraulikmedium und
- Fig. 3: eine schematische Darstellung eines weiteren Ausführungsbeispiels mit einer Kolben-Zylindereinheit mit Treibkolben.

### Beschreibung eines Ausführungsbeispiels des Verfahrens sowie der Vorrichtung zur Durchführung des Verfahrens:

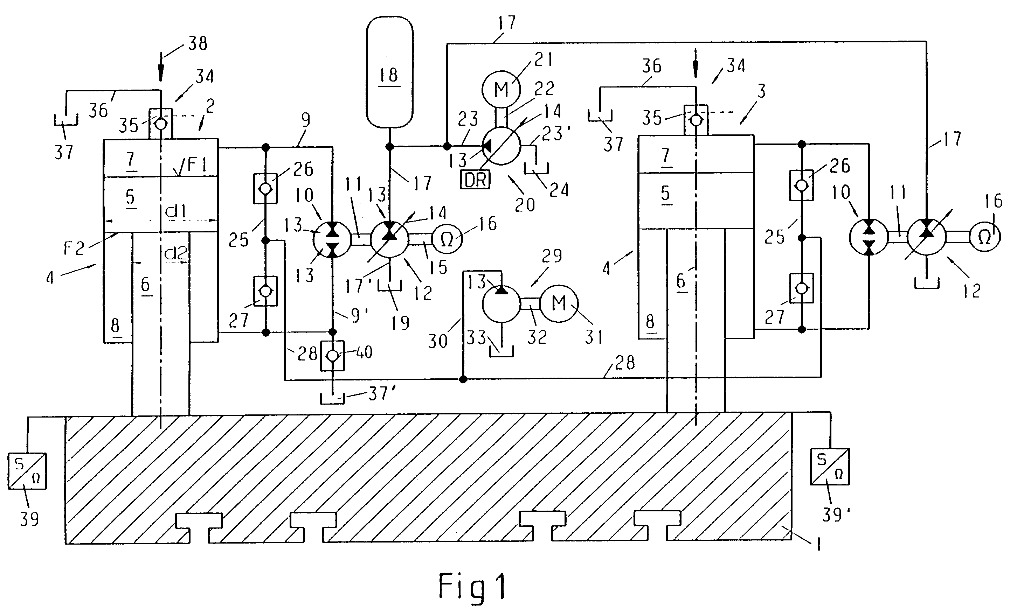

In der Figur 1 ist für eine nicht näher dargestellte hydraulische Presse ein Pressenstößel 1 dargestellt, der an seiner Unterseite ein nicht näher dargestelltes Oberwerkzeug aufnimmt. Die Auf- und Abwärtsbewegung des Pressenstößels 1 erfolgt auf hydraulischem Weg über zwei seitlich am Pressenstößel angreifende Hydrozylinder oder Kolben-Zylindereinheiten 2, 3, die als Hub- und Arbeitszylinder zur Durchführung des Umformvorganges oder Schneidvorganges am Werkstück dienen. Anstelle von zwei seitlichen Hydrozylindern 2, 3 können auch vier, in den Eckbereichen des Pressenstößels 1 angeordnete Hydrozylinder als Preßzylinder vorgesehen sein, wobei diese in der Figurendarstellung jeweils hinter den dargestellten Hydrozylindern 2, 3 angeordnet wären. Es ist auch die Anordnung von nur einem zentral am Pressenstößel angreifenden Arbeitszylinder möglich.

Die beiden Hydrozylinder bzw. Kolben-Zylindereinheiten 2, 3 sind symmetrisch am Pressenstößel 1 angeordnet und mit symmetrischer Anordnung der Regelorgane zur Regelung jedes Hydrozylinders 2, 3 bestückt. Der Aufbau und die Funktionsweise des Pressenantriebs wird deshalb anhand des in der Figur 1 dargestellten linken Hydroantriebs beschrieben.

Demzufolge weist jede Kolben-Zylindereinheit bzw. jeder Hydroantrieb 2, 3 einen Arbeitszylinder 4 auf, in dessen Inneren ein Arbeitskolben auf- und abwärts bewegt wird. Der Arbeitskolben 5 weist an seiner unteren Seite eine Kolbenstange 6 auf, die mit dem Pressenstößel 1 verbunden ist. Oberhalb des Arbeitskolbens 5 befindet sich ein im Querschnitt kreiszylindrischer Zylinderraum 7, unterhalb des Arbeitskolbens 5 ein im Querschnitt ringförmiger Zylinderraum 8. Die wirksame kreiszylindrische obere Druckfläche F₁ auf den Arbeitskolben 5 wird demzufolge durch den Durchmesser d₁ des Arbeitskolbens 5 bestimmt. Die wirksame untere kreisringförmige Druckfläche F₂ wird durch die Flächendifferenz bezüglich des Durchmessers d₁ des Arbeitskolbens 5 abzüglich des Durchmessers d₂ der Kolbenstange 6 gebildet.

Der obere Zylinderraum 7 ist mit dem unteren Zylinderraum 8 über eine Hydraulikleitung 9, 9' verbunden. In diese Hydraulikleitung 9 ist eine als Pumpe oder als Motor betreibbare erste Hydraulikeinrichtung 10 eingesetzt, die aufgrund ihrer eingezeichneten Symbole 13 in je zwei Strömungrichtungen sowohl als Pumpe als auch als Motor arbeiten kann. Dabei erübrigt sich eine Verstellbarkeit dieser Hydraulikeinrichtung, d. h. sie ist konstant arbeitend ausgebildet. Die Wirkungsweise wird nachstehend im Zusammenhang noch erläutert.

Die erste Hydraulikeinrichtung 10 ist über eine Antriebswelle 11 mit einer zweiten Hydraulikeinrichtung 12 verbunden, die aufgrund der Symboldarstellung 13 als Pumpe in einer Strömungsrichtung und als Motor in entgegengesetzter Strömungsrichtung arbeitet, was wiederum durch die Symbole (schwarze Dreiecke 13) gleichermaßen wie bei der ersten Hydraulikeinrichtung 10 angedeutet ist. Der die zweite Hydraulikeinrichtung 12 schräg durchsetzende Pfeil 14 zeigt die Verstellbarkeit dieser zweiten Hydraulikeinrichtung an, d. h. sie ist mit einer Schwenkwinkelverstellung versehen, die einen variablen Durchlaß des Volumenstroms ermöglicht.

Die zweite Hydraulikeinrichtung 12 ist über eine Antriebswelle 15 mit einem Drehzahlmeßsystem 16 verbunden, welches die Drehzahl der zweiten Hydraulikeinrichtung 12 und damit den Antrieb der ersten Hydraulikeinrichtung 10 erfaßt.

Die verstellbare zweite Hydraulikeinrichtung 12 ist über eine erste Hydraulikleitung 17 mit einem Hydrospeicher 18 und über eine zweite Leitung 17' mit einem drucklosen Ölbehälter oder Tank 19 vebunden. Zusätzlich ist an die Leitung 17 eine nur als verstellbare, druckgeregelte Pumpe arbeitende dritte Hydraulikeinrichtung 20 angeschlossen, die von einem E-Motor 21 über eine Antriebswelle 22 angetrieben wird. Eine erste Hydraulikleitung 23 führt zur Hydraulikleitung 17, eine zweite Hydraulikleitung 23' zum zugehörigen drucklosen Ölbehälter bzw. Tank 24 mit Hydraulikmedium. Der die Pumpendarstellung durchsetzende Pfeil 14 stellt wiederum die Verstellbarkeit oder Regelbarkeit dar. Ein schwarzes Dreieck 13 in der Pumpe zeigt die Wirkungsweise als Pumpe auf.

Die Verbindungsleitung 9, 9' zwischen dem oberen Zylinderraum 7 und dem unteren Zylinderraum 8 wird von einer parallel liegenden Verbindungsleitung 25 durchsetzt, die zwei gegenläufig angeordnete Rückschlagventile 26, 27 mit entsprechenden Symbolen aufweist. Dabei öffnen die Rückschlagventile in Richtung zu dem jeweiligen Zylinderraum 7, 8.

Zwischen den beiden Rückschlagventilen 26, 27 mündet in der Verbindungsleitung 25 eine weitere Hydraulikleitung 28, die mit einer vierten Hydraulikeinrichtung 29 über eine Anschlußleitung 30 verbunden ist. Diese vierte Hydraulikeinrichtung 29 ist als einfache Konstantpumpe ohne Verstelleinrichtung ausgebildet, d. h. sie wirkt lediglich als Förderpumpe in einer Förderrichtung, wobei ein E-Motor 31 den Antrieb über eine Antriebswelle 32 bewirkt. Hierdurch wird Hydraulikmedium aus einem Tank 33 in die Hydraulikleitung 30, 28 gefördert. Das schwarze Dreieck 13 in der Pumpendarstellung der Hydraulikeinrichtung 29 zeigt die nicht geregelte Pumpenfunktion an.

Der obere Zylinderraum 7 der Kolbenzylindereinheit 2, 3 ist mit einer zusätzlichen Vorfülleinrichtung 34 versehen, die zum Ausgleich des unterschiedlichen Füllvolumens der beiden Zylinderräume 7, 8 bei der Bewegung des Arbeitskolbens 5 dient. Da in dem oberen Zylinderraum 7 keine Kolbenstange 6 vorhanden ist, entsteht eine Volumendifferenz des in den beiden Zylinderräumen 7, 8 verdrängten Hydraulikmediums. Hierfür weist die Vorfülleinrichtung 34 ein extern zu öffnendes Rückschlagventil 35 sowie eine Hydraulikleitung 36 zu einem Ölbehälter 37 auf. Der Pfeil 38 zeigt eine Durchströmungsrichtung des Rückschlagventils 35.

Wie aus Figur 1 ersichtlich, ist der untere Zylinderraum 8 der Kolben-Zylindereinheit 4 über die Druckmittelleitung 9' mit einem Ölbehälter 37' verbunden, der über ein Rückschlagventil 40 an die Leitung 9' angekoppelt ist. Der Ölbehälter 37' kann mit dem Ölbehälter 37 der Vorfülleinrichtung 34 übereinstimmen.

Der Pressenstößel 1 weist vorzugsweise zwei oder mehrere Wegmeßeinrichtungen 39, 39' auf, die die Bewegung des Pressenstößels 1 an unterschiedlichen Stellen erfassen und damit eine Parallelitätsbestimmung durchführen können.

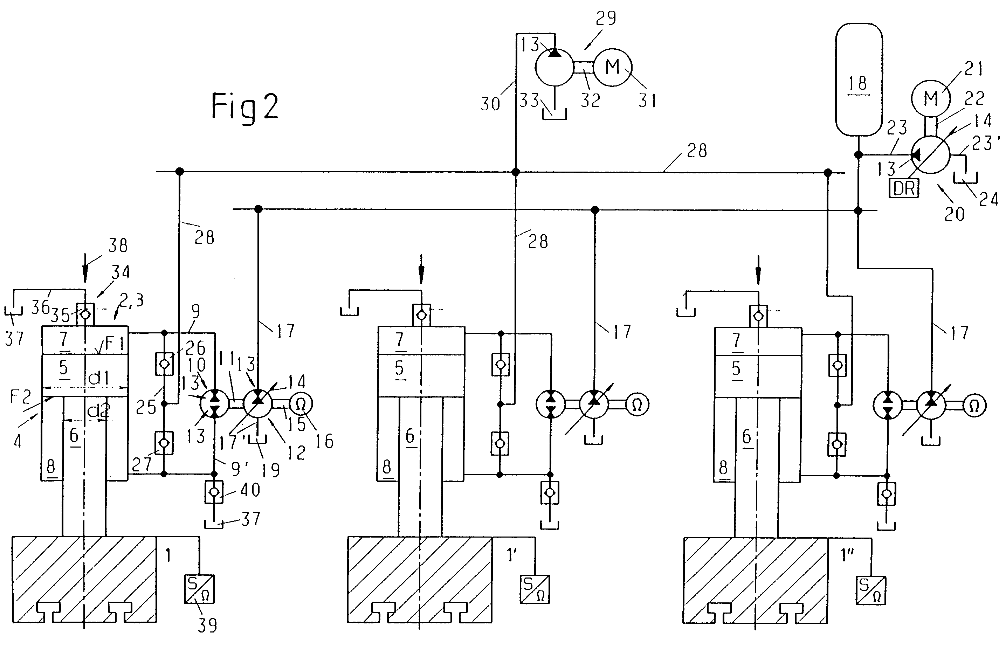

Wie aus den Figuren 1 und 2 ersichtlich, sind die zuvor beschriebenen Verstell- und Regeleinrichtungen an den Kolben-Zylindereinheiten 2, 3 jeweils gleich und gleichwirkend ausgebildet, wobei der Druckspeicher 18 und die Hydraulikeinrichtungen 20 und 29 als für alle Kolbenzylindereinheiten 2, 3 gemeinsame Bauteile dienen. Demzufolge sind beispielsweise in der Fig. 2 drei einzelne Stößeleinheiten 1, 1', 1'' dargestellt, die beispielsweise einzelne oder mehrere Kolben-Zylindereinheiten 2, 3 jeweils umfassen können. Diese Stößeleinheiten können in einer einzigen Presse nebeneinander oder als mehrere Einzelpressen angeordnet sein. Entsprechend der Darstellung in Fig. 2 weisen dabei alle Stößeleinheiten eine zentrale Druckversorgung auf, bestehend aus dem einzigen zentralen Druckspeicher 18 mit angeschlossener Hydraulikeinrichtung 20 und zentraler Zuführleitung 17 sowie der Hydraulikeinrichtung 29 mit Druckmittelleitung 28 als Systemauffüllpumpe. Durch diese Maßnahme der zentralen Druckversorgung, die über eine jeweilige Sekundäreinrichtung 10, 12 mit der einzelnen Presse verbunden ist, ist eine erhebliche Energieeinsparung sowie ein erheblich geringerer baulicher Aufwand möglich.

Die erfindungsgemäße Pressen-Antriebseinrichtung arbeitet wie folgt:

### Phase 1:

Die Phase 1 betrifft die Abwärtsbewegung des Kolbens 5 der Kolben-Zylindereinheit 2, 3 aus seiner oberen Ausgangsstellung, d. h. die Abwärtsbewegung des Stößels 1 aus seiner obersten Umkehrposition in Richtung zum Werkstück. Hierfür befindet sich im oberen Zylinderraum 7 sowie im unteren Zylinderraum 8 ein Hydraulikmedium, z. B. Hydrauliköl. Die Auffüllung des Systems mit Druckmedium erfolgt im Vorfeld über die als Systemfüllpumpe ausgebildete vierte Hydraulikeinheit 29, deren Antriebsmotor 31 die Konstantpumpe 29 antreibt und Hydraulikmedium aus dem Tank 33 über die Hydraulikleitungen 30, 28, 25 und über die Rückschlagventile 26, 27 in die beiden Zylinderräume 7, 8 fördert. Dabei arbeitet die Konstantpumpe 29 mit einem niedrigen Druck von beispielsweise 5 bar.

Die Abwärtsbewegung des Kolbens 5 erfolgt in der Phase 1 in einem Eilgang mit einer vorgegebenen Abwärtsgeschwindigkeit. Hierbei wird prozessorgesteuert nach Anfrage des Drehzahlmeßsystemes 16 die zweite Hydraulikeinrichtung 12 entsprechend eingeregelt. Dabei wird in dieser abwärtsgerichteten Bewegungsphase des Arbeitskolbens 5 das im Zylinderraum 8 befindliche Druckmedium über die Hydraulikleitung 9' durch die erste Hydraulikeinrichtung 10 gefördert und gelangt über die weitergehende Hydraulikleitung 9 in den oberen Zylinderraum 7. Da das durch den Kolben 5 bei der Abwärtsbewegung verdrängte Flüssigkeitsvolumen aufgrund der vorhandenen Kolbenstange 6 kleiner ist als das hierbei oberhalb des Kolbens 5 entstehende Volumen, muß die Differenz zwischen dem aus dem Zylinderraum 8 verdrängten Volumen und dem im Zylinderraum 7 entstehenden Volumen aus der Vorfülleinrichtung 34 über das Rückschlagventil 35 zugeführt werden. Hierbei wird Hydraulikmedium über die Hydraulikleitung 36 aus dem Öltank 37 angesaugt, so daß sich auch der Zylinderraum 7 vollständig mit Hydraulikmedium füllt.

Die Abwärtsbewegung des Arbeitskolbens 5 geschieht aufgrund der Lageenergie sämtlicher sich nach unten hin bewegenden Teile, die insbesondere durch das Gewicht des Pressenstößels 1 mit zugehörigem Oberwerkzeug und die sich nach unten bewegenden Teile der Kolben-Zylindereinheit 2, 3 dargestellt sind. Das im unteren Zylinderraum 8 sich befindende Hydraulikmedium wird demnach durch das Eigengewicht dieser Teile aus diesem Raum 8 herausgepreßt und treibt bei der Abwärtsbewegung die erste Hydraulikeinrichtung 10 als Hydraulikmotor (Hydromotor) an. Die so freigesetzte Energie wird demzufolge von dem Hydromotor 10 auf die Antriebswelle 11 und von dort auf die als verstellbare Hydropumpe arbeitende zweite Hydraulikeinrichtung 12 übertragen. Die Hydropumpe 12 kann entsprechend ihrer Schwenkwinkelverstellung 14 das Maß des Energieflusses von der Hydropumpe 10 und damit den Bewegungsvorgang des Pressenstößels prozessorgeregelt steuern. Insbesondere kann der Pressenstößel vor dem Auftreffen auf das Werkstück wieder abgebremst werden.

Die durch die Stößelabwärtsbewegung freiwerdende Lageenergie treibt damit die zweite Hydraulikeinrichtung 12 als Hydropumpe derart an, daß Druckmedium aus dem Öltank 19 über die Leitung 17' zur verstellbaren Hydropumpe 12 und von dort aus über die Hydraulikleitung 17 zum Hydrospeicher 18 gefördert wird. Der Hydrospeicher 18 wird somit durch die Abwärtsbewegung des Pressenstößels 1 mit Druckmedium aufgeladen, d. h. auf ein höheres Energieniveau gebracht. Hierdurch wird die freiwerdende Lageenergie im System gespeichert. Die zusätzliche Aufladung des Hydrospeichers 18 auf den für die Umformung erforderlichen Druck (Nenndruck) geschieht durch die dritte Hydraulikeinrichtung 20.

### Phase 2:

Die zweite Arbeitsphase betrifft den eigentlichen Umformvorgang oder Schneidvorgang am Werkstück, d. h. den eigentlichen Arbeitshub, bei welchem eine hohe Preßkraft erforderlich ist. In dieser Phase wird der Pressenstößel 1 mit einer stark verminderten Arbeitsgeschwindigkeit weiter nach unten bewegt, wobei zur Durchführung des Umformvorgangs eine zusätzliche Druckbeaufschlagung im oberen Zylinderraum 7 oberhalb des Arbeitskolbens 5 erforderlich ist. Hierfür wird die Arbeitsweise der ersten Hydraulikeinrichtung 10 sowie der zweiten Hydraulikeinrichtung 12 umgekehrt, d. h. die in der ersten Phase als Hydromotor arbeitende erste Hydraulikeinrichtung 10 wird zu einer Hydropumpe und die in der ersten Phase als Hydropumpe arbeitende zweite Hydraulikeinrichtung 12 wirkt nun als Hydromotor. Die Druckbeaufschlagung des Systems und insbesondere des oberen Zylinderraums 7 geschieht demnach durch die erste Hydraulikeinrichtung 10 als Hydropumpe. Bei dieser Funktion wirkt auf die zweite Hydraulikeinrichtung 12 als Hydromotor der Druck aus dem Hydrospeicher 18 entsprechend dem durch die Hydraulikpumpe 20 vorbestimmten Druck. Der einstellbare Schwenkwinkel 14 des Hydromotors 12 bestimmt das Maß des Volumensstroms V durch den Hydromotor 12 und damit die Leistungsabgabe an die Antriebswelle 11 zur Hydropumpe 10 und damit den Volumenstrom durch die Hydropumpe 10 zur Erzeugung eines hohen Druckes im Zylinderraum 7.

Der Aufbau des erforderlichen und geforderten Druckniveaus (Nenndruck) könnte auch zusätzlich zum Speicher 18 mittels der dritten Hydraulikeinrichtung 20 erfolgen, die als verstellbare druckgeregelte Hydropumpe arbeitet, sofern der Speicher 18 noch nicht auf Nenndurck ist. Durch diesen Druckaufbau wird demzufolge die zweite Hydraulikeinrichtung 12 als verstellbarer Hydromotor betrieben, der seinerseits über die Antriebswelle 11 die erste Hydraulikeinrichtung 10 als Hydraulikpumpe (Hydropumpe) antreibt, so daß fortlaufend Hydraulikmedium vom unteren Zylinderraum 8 und/oder aus dem Ölbehälter 37' mit Rückschlagventil 40 in den oberen Zylinderraum 7 gefördert wird. Dabei baut die als Hydropumpe arbeitende erste Hydraulikeinrichtung 10 im oberen Zylinderraum 7 den erforderlichen Arbeitsdruck für den Umformvorgang auf. Aufgrund des Rückschlagventils 35 kann das Druckmedium nicht nach außen entweichen.

Das erforlderliche Antriebsmoment auf die Antriebswelle 11 für die erste Hydraulikeinrichtung 10 ergibt sich aus dem Zusammenhang zwischen dem Druck des Hydrospeichers 18 und dem eingeregeltem Volumenstrom V der zweiten Hydraulikeinrichtung 12. Der Volumenstrom wird jeweils in Abhängigkeit von der momentanen erforderlichen Umformkraft mittels der Schwenkwinkelverstellung 14 der Pumpe 12 eingeregelt.

### Phase 3:

In der dritten Arbeitsphase wird nach durchgeführtem Umformvorgang am Werkstück der Pressenstößel 1 wieder in seine obere Ausgangsposition gefahren. Hierfür muß das Druckmedium vom oberen Zylinderraum 7 in den unteren Zylinderraum 8 gepumpt werden, wobei die erste Hydraulikeinrichtung 10 wiederum als Hydraulikpumpe geschaltet wird, die von der als Hydraulikmotor dienenden zweiten Hydraulikeinrichtung 12 angetrieben wird. Dies geschieht durch die im Hydrospeicher 18 vorhandene hohe Speicherenergie an Druckmedium, die den Hydromotor 12 bei hohem Druck mit einem geringen Volumenstrom und damit die Hydropumpe 10 mit einem hohen Volumenstrom bei niedrigem Druck derart antreibt, daß das Druckmedium vom oberen Zylinderraum 7 in den unteren Zylinderraum 8 jeder Kolben-Zylindereinheit 2, 3 befördert wird. Hierfür ist eine Richtungsumkehr des Förderstroms in der ersten Hydraulikeinrichtung 10 erforderlich (siehe entsprechende schwarze Dreiecke 13). Aufgrund des niedrigen erforderlichen Antriebsmomentes für die Hydropumpe 10 braucht für den Hydromotor 12 demnach nur ein geringer Volumenstrom eingeregelt werden.

Da im oberen Zylinderraum 7 aufgrund des größeren Volumens überschüssiges Druckmedium vorhanden ist, wird dieses durch das extern zu öffnende Rückschlagventil 35 über die Druckmediumleitung 36 in den Öltank 37 befördert.

Der stößelwegabhängige Umformvorgang am Werkstück erfordert eine bestimmte Umformkraft oder ein bestimmtes Umformkraftprofil. Dieses Kraftprofil kann entsprechend dem Druckaufbau im Zylinderraum 7 mittels der erfindungsgemäßen Steuerung sehr leicht eingestellt werden, in dem insbesondere die zweite Hydraulikeinrichtung 12 mit einer Verstelleinrichtung bzw. Schwenkwinkelverstellung 14 ausgestattet sind. Dabei erzeugt die Schwenkwinkelverstellung der dritten Hydraulikeinrichtung 20 das erforderliche maximale Druckniveau im Hydrospeicher 18, welches sich über den schwenkwinkelverstellbaren Hydromotor 12 auf die Druckmittelpumpe 10 auswirkt. Dabei wird nach dem Prinzip der Sekundärregelung ein hohes, gleichbleibendes Druckniveau eingestellt, und der Volumenstrom des Hydraulikmediums über die schwenkwinkelverstellbare Hydropumpe 12 während des Umformvorgangs gesteuert. Der Volumenstrom durch die Hydropumpe 12 bestimmt demnach die Antriebsleistung auf der Antriebswelle 11 zur Hydropumpe 10. Die Drehzahlmeßeinrichtung 16 steuert dabei in Verbindung mit der Wegmeßeinrichtung 39, 39' die Gleichmäßigkeit und damit die Parallelität der Kolben-Zylindereinheiten 2, 3 bzw. des Pressenstößels 1.

Mit der erfindungsgemäßen Pressensteuerung ist die zu installierende elektrische Antriebsleistung erheblich unter derjenigen, die bei normalen, direkt angetriebenen und vor allem speicherbetriebenen Pressen erforderlich ist.

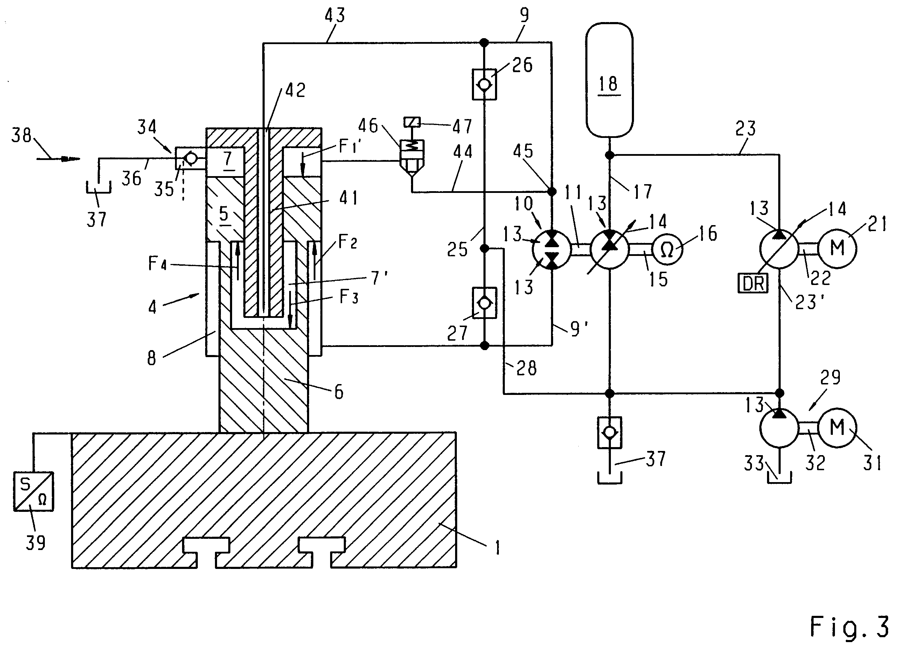

Das Ausführungsbeispiel nach Fig. 3 zeigt ein alternatives Ausführungsbeispiel der Erfindung zur Durchführung des erfindungsgemäßen Verfahrens. Um eine zusätzliche Unterstützung der Abwärtsbewegung des Arbeitskolbens 5 zu erzielen, ist innerhalb des Arbeitskolbens 5 mit Kolbenstange 6 ein weiterer Zylinderraum 7' vorgesehen, der ebenfalls mit Druckmedium beaufschlagbar ist. Hierfür weist der Arbeitszylinder 4 eine zusätzliche Zylinderstange 41 mit einer Bohrung 42 auf, die den oberen Zylinderraum 7, den Arbeitskolben 5 und die Kolbenstange 6 stationär durchsetzt. Hierdurch wird der obere Zylinderraum 7 ebenfalls zu einem ringförmigen Zylinderraum mit einer verkleinerten wirksamen Druckfläche F₁'. Der zusätzliche Zylinderraum 7' weist eine untere kreisförmige Arbeitsfläche F₃ und eine obere ringförmige Fläche F₄ auf, wobei sich die wirksame Fläche aus F₃ - F₄ für die Abtriebskraft ergibt. Die Zylinderstange 41 ist stationär innerhalb des Zylinders 4 angeordnet und erstreckt sich soweit in den Zylinderraum 7' hinein, daß ein vollständiger Hub des Pressenstößels 1 durchgeführt werden kann. Der Zylinderraum 7' ist über die Bohrung 42 mit einer Leitung 43 verbunden, die mit der Leitung 9 im Ausführungsbeispiel nach Figur 1 und 2 verbunden ist. Die restliche Anordnung der Antriebs- und Steuereinheiten bzw. Regeleinrichtungen entspricht dem Ausführungsbeispiel nach Fig. 1. Auf die entsprechende Beschreibung wird verwiesen.

Da die Leitung 9 mit dem Zylinderraum 7' verbunden ist, wird eine zusätzliche Leitung 44 von der Leitung 9 in einem Kreuzungspunkt 45 abgezweigt und über ein Zweiwege-Sitzventil 46 mit dem ringförmigen Zylinderraum 7 verbunden. Das Zweiwege-Sitzventil 46 wird durch ein Vorsteuerventil 47 betätigt, wobei dieses Vorsteuerventil 47 durch die Wegmeßeinrichtung 39 angesteuert wird. Wird dieses Zweiwege-Sitzventil 46 geschlossen, so wird nur der Zylinderraum 7' mit Druckmedium beaufschlagt, wie dies im Ausführungsbeispiel zum Zylinderraum 7 beschrieben ist. Durch eine geregelte Öffnung des Zweiwege-Sitzventils 46 wird der Zylinderraum 7 zusätzlich mit Druckmedium beaufschlagt, so daß die Arbeitsfläche F₁' zusätzlich zur Wirkung kommt. Hierdurch wird die Abwärtsbewegung des Kolbens 5 mit Kolbenstange 6 zusätzlich beschleunigt.

Die Erfindung ist nicht auf das dargestellte und beschriebene Ausführungsbeispiel beschränkt. Sie umfaßt auch vielmehr alle fachmännischen Weiterbildungen im Rahmen des erfindungsgemäßen Gedankens.
- 1: Pressenstößel
- 2: Kolben-Zylindereinheit
- 3: Kolben-Zylindereinheit
- 4: Arbeitszylinder
- 5: Arbeitskolben
- 6: Kolbenstange
- 7: Zylinderraum
- 8: Zylinderraum
- 9: Druckmediumleitung
- 10: erste Hydraulikeinrichtung
- 11: Antriebswelle
- 12: zweite Hydraulikeinrichtung
- 13: schwarze Dreiecke
- 14: Schwenkwinkelverstellung
- 15: Antriebswelle
- 16: Drehzahlmeßsystem
- 17: Hydraulikleitung
- 18: Hydrospeicher
- 19: druckloser Ölbehälter
- 20: dritte Hydraulikeinrichtung
- 21: E-Motor
- 22: Antriebswelle
- 23: Hydraulikleitung
- 24: Ölbehälter
- 25: Verbindungleitung
- 26: Rückschlagventil
- 27: Rückschlagventil
- 28: Hydraulikleitung
- 29: vierte Hydraulikeinrichtung
- 30: Anschlußleitung
- 31: E-Motor
- 32: Antriebswelle
- 33: Öltank
- 34: Vorfülleinrichtung
- 35: Rückschlagventil
- 36: Hydraulikleitung
- 37: Ölbehälter
- 38: Pfeil
- 39: Wegmesseinrichtung
- 40:
- 41: Zylinderstange
- 42: Bohrung
- 43: Leitung
- 44: Leitung
- 45: Kreuzungspunkt
- 46: Zweiwege-Sitzventil
- 47: Vorsteuerventil

## Patentansprüche

1. Verfahren zur Regelung des Antriebs insbesondere einer hydraulischen Presse und insbesondere zum Umformen und/oder Schneiden von Blechen, Kunststoffen oder dergleichen, mit wenigstens einer doppelseitig beaufschlagbaren Kolben-Zylindereinheit (2, 3) zum Antrieb eines Pressenstößels (1), wobei der Antriebskolben (5) mittels eines Hydraulikmediums im Sinne einer Wegverschiebung des Pressenstößels (1) beaufschlagt wird, dadurch gekennzeichnet, daß in einer ersten Arbeitsphase der Presse der obere (7) und der untere (8) Zylinderraum der Kolben-Zylindereinheit (2, 3) über eine erste, als Hydromotor arbeitende Hydraulikeinrichtung (10) verbunden ist, die während der Abwärtsbewegung des unbelasteten Pressenstößels (1) die Lageenergie des Systems auf eine zweite, als Hydropumpe arbeitende Hydraulikeinrichtung (12) überträgt, daß der zweiten Hydraulikeinrichtung (12) eine hydraulische Speichereinheit (18) für Hydraulikmedium nachgeschaltet ist, die durch eine dritte Hydraulikeinrichtung (20) mit Hydraulikmedium aufgeladen wird und daß in der nachfolgenden Umformphase oder Bearbeitungsphase der Presse eine Wirkungsumkehr der ersten Hydraulikeinrichtung (10) zu einer Hydraulikpumpe und der zweiten Hydraulikeinrichtung (12) zu einem Hydromotor derart erfolgt, daß eine zusätzliche Druckbeaufschlagung im oberen Zylinderraum (7) der Kolben-Zylindereinheit (2, 3) erfolgt, wobei die zweite, als Hydromotor arbeitende Hydraulikeinrichtung (12) wenigstens teilweise über die Speichereinheit (18) angetrieben wird.

2. Verfahren nach Anspruch 1, dadurch gekennzeichnet, daß in der zweiten Arbeitsphase (Umformvorgang) die zweite Hydraulikeinrichtung (12) als Hydromotor (12) zum Antrieb der ersten Hydraulikeinrichtung (10) als Hydropumpe (10) dient, wobei mittels der weiteren, dritten Hydraulikeinrichtung (20) als druckgeregelte Hydropumpe ein erforderliches Druckniveau als Nenndruck im Druckspeicher (18) aufgebaut ist.

3. Verfahren nach Anspruch 1 oder 2, dadurch gekennzeichnet, daß die dritte Hydraulikeinrichtung (20) während der Umformphase neben dem Druckspeicher (18) zum Aufbau des an der zweiten Hydraulikeinrichtung (12) geforderten Druckniveaus dient.

4. Verfahren nach Anspruch 1 oder 2, dadurch gekennzeichnet, daß die dritte Hydraulikeinrichtung (20) als schwenkwinkelverstellbare Hydropumpe (20) ausgebildet ist, die von einem E-Motor (21) angetrieben wird.

5. Verfahren nach einem der vorhergehenden Ansprüche, dadurch gekennzeichnet, daß die doppelseitig mit Druckmedium beaufschlagbare Kolbenzylindereinheit (2, 3) einen unteren, von der Kolbenstange (6) durchsetzten, im Querschnitt rinförmigen Zylinderraum (8) und einen oberen, im Querschnitt kreiszylindrischen Zylinderraum (7) ohne Kolbenstange aufweist.

6. Verfahren nach Anspruch 1 oder 5, dadurch gekennzeichnet, daß dem oberen, im pro Zeiteinheit verdrängbaren Volumen größeren kreiszylindrischen Zylinderraum (7) der Kolben-Zylindereinheit (2, 3) eine zusätzliche Vorfülleinheit (34) zugeordnet ist, die einen zusätzlichen Bedarf an Hydraulikmedium in dem Umfang abdeckt, wie dies der pro Zeiteinheit geförderten Volumendifferenz zwischen dem unteren Zylinderraum (8) und dem oberen Zylinderraum (7) bei der Hubbewegung des Kolbens (5) entspricht.

7. Verfahren nach Anspruch 6, dadurch gekennzeichnet, daß die Vorfülleinheit (34) ein als Rückschlagventil (35) ausgebildetes, extern zu öffnendes Ventil sowie einen Vorfülltank 37 umfaßt.

8. Verfahren nach einem der vorhergehenden Ansprüche, dadurch gekennzeichnet, daß der Verbindungsleitung (9, 9') für das Hydraulikmedium von dem oberen (7) zum unteren (8) Zylinderraum der Kolben-Zylindereinheit (2, 3) mit integrierter erster Hydraulikeinrichtung (10) eine weitere Hydraulikleitung (25) parallel geschaltet ist, die jeweils zwei gegenläufig sperrende bzw. öffnende Rückschlagventile (26, 27) aufweist und daß zwischen den Rückschlagventilen (26, 27) eine Hydraulikleitung (28) mündet, die zu einer weiteren, als Systemauffüllpumpe dienenden Hydraulikeinrichtung (29) führt.

9. Verfahren nach einem der vorhergehenden Ansprüche, dadurch gekennzeichnet, daß dem Pressenstößel (1) wenigstens eine Meßeinrichtung (39, 39') für den Stößelweg bzw. der Stößelgeschwindigkeit zugeordnet ist, die als Regelgröße für die Hydrauliksteuerung des Druckmediums insbesondere in der zweiten Hydraulikeinrichtung (12) dient.

10. Verfahren nach einem der vorhergehenden Ansprüche, dadurch gekennzeichnet, daß wenigstens die zweite Hydraulikeinrichtung (12) mit einer Schwenkwinkelverstellung (14) zur Regelung des Volumenstroms V ausgestattet ist, wobei vorzugsweise eine zusätzlich Drehzahlmesseinrichtung (16) vorgesehen ist.

11. Verfahren nach einem der vorhergehenden Ansprüche, dadurch gekennzeichnet, daß die druckgeregelte Pumpe der dritten Hydraulikeinrichtung (20) zur Erzeugung des Hydraulikmedium-Nenndrucks eine Schwenkwinkelverstellung (14) zur Änderung des Volumenstroms V aufweist.

12. Verfahren nach einem der vorhergehenden Ansprüche, dadurch gekennzeichnet, daß dem Pressenstößel (1) wenigstens ein und insbesondere zwei oder vier unabhängig voneinander steuerbare Kolbenzylindereinheiten (2, 3) zugeordnet sind.

13. Verfahren nach einem der vorhergehenden Ansprüche, dadurch gekennzeichnet, daß eine Parallelitätsregelung des Pressenstößels (1) durch eine Regelung der Drehzahl an der zweiten Hydraulikeinrichtung (12) erfolgt, die in Abhängigkeit des gemessenen Stößelweges an verschiedenen Stößelstellen ein Signal erzeugt.

14. Verfahren nach einem der vorhergehenden Ansprüche, dadurch gekennzeichnet, daß eine oder mehrere Kolben-Zylindereinheiten (2, 3) an einem Pressenstößel (1) oder eine oder mehrere Kolben-Zylindereinheiten an mehreren Stößeln in einer Presse oder eine oder mehrere Kolben-Zylindereinheiten an mehreren Einzelpressen vorgesehen sind und daß jeder dieser Stößeleinheiten eine zentrale Druckversorgung, insbesondere bestehend aus einem Druckspeicher (18) sowie einer Hydraulikeinrichtung (20, 29) zugeordnet ist.

15. Verfahren nach einem der vorhergehenden Ansprüche, dadurch gekennzeichnet, daß in der Eilgangphase die Speichereinheit (18) wenigstens teilweise durch die rückgewinnbare Lageenergie der sich abwärtsbewegenden Teile aufgeladen wird.

16. Verfahren nach einem der vorhergehenden Ansprüche 1 bis 15, dadurch gekennzeichnet, daß die Kolben-Zylindereinheit (2, 3) einen oberen, ringförmigen Zylinderraum (7) und einen unteren, ringförmigen Zylinderraum (8) aufweist, die zur Bewegung des Pressenstößels (1) dienen und daß ein weiterer, dem oberen ringförmigen Zylinderraum (7) wirkungsmäßig parallel geschalteter Zylinderraum (7') vorgesehen ist, der im Zusammenhang mit dem ringförmigen Zylinderraum (7) für eine beschleunigende Abwärtsbewegung des Kolbens (5) mit Kolbenstange (6) dient.

17. Verfahren nach Anspruch 16, dadurch gekennzeichnet, daß der obere Zylinderraum (7), der Arbeitskolben (5) sowie die Kolbenstange (6) von einer stationären Zylinderstange (41) mit Bohrung (42) durchsetzt sind.

18. Verfahren nach Anspruch 16 oder 17, dadurch gekennzeichnet, daß der Zylinderraum (7, 7') über ein Zweiwege-Sitzventil (46) mit Druckmedium von der Hydromotor/Pumpeneinrichtung (10) beaufschlagt wird.

19. Verfahren nach Anspruch 18, dadurch gekennzeichnet, daß das Zweiwege-Sitzventil (46) durch ein Vorsteuerventil (47) betätigbar ist, wobei eine Wegmeßeinrichtung (39) am Pressenstößel (1) das Vorsteuerventil (47) ansteuert.

20. Vorrichtung zur Durchführung des Verfahrens zur Regelung des Antriebs insbesondere einer hydraulischen Presse und insbesondere zum Umformen und/oder zum Schneiden von Blechen, Kunststoffen oder dergleichen mit wenigstens einer doppelseitig beaufschlagbaren Kolben-Zylindereinheit (2, 3) zum Antrieb eines Pressenstößels (1), wobei der Antriebskolben (5) mittels eines Hydraulikmediums im Sinne einer Wegverschiebung des Pressenstößels (1) beaufschlagbar ist, dadurch gekennzeichnet, daß der Kolben-Zylindereinheit (2, 3) eine erste Hydraulikeinrichtung (10) zugeordnet ist, die in der Abwärtsbewegung des Pressenstößels (1) (Eilgang) als Hydromotor (10) zum Antrieb einer zweiten Hydraulikeinrichtung (12) dient, wobei die zweite Hydraulikeinrichtung (12) als schwenkwinkelverstellbare Hydropumpe über eine Antriebswelle (11) von dem Hydromotor (10) antreibbar ist und ein Hydraulikmedium von einem Tank (19) in einen Druckspeicher (18) fördert.

21. Vorrichtung nach Anspruch 20, dadurch gekennzeichnet, daß dem Hydraulikspeicher (18) eine weitere Hydraulikeinrichtung (20) zugeordnet ist, die eine druckgeregelte bzw. schwenkwinkelverstellbare Hydropumpe (20) umfaßt, die zur Druckbeaufschlagung des Hydrospeichers (18) dient, wobei der Hydromotor (12) in der Umformphase des Werkstücks die erste Hydraulikeinrichtung (10) als Konstant-Pumpe antreibt, um den erforderlichen Nenndruck im oberen Zylinderraum der Zylindereinheit (2, 3) zu erzeugen.

22. Vorrichtung nach Anspruch 20 oder 21, dadurch gekennzeichnet, daß die Kolbenzylindereinheit (2, 3) einen Zylinder (4) umfaßt, der einen oberen, ringförmigen Zylinderraum (7) und einen unteren, ringförmigen Zylinderraum (8) aufweist, die zur Druckbeaufschlagung eines Kolbens (5) mit Kolbenstange (6) dienen, und daß dem oberen, ringförmigen Zylinderraum (7) ein weiterer Zylinderraum (7') parallel geschaltet ist, der innerhalb des Kolbens (5) mit Kolbenstange (6) angeordnet und über eine Zylinderstange (41) mit Bohrung (42) mit Druckmedium beaufschlagbar ist.
